# EUROPEAN PATENT APPLICATION

(11) **EP 2 308 578 A1**
(43) Date of publication of application: **13.04.2011**
(21) Application number: 09802839.2
(22) Date of filing: 14.07.2009
(51) Int. Cl.: B01D 35/06, B01D 24/00, B01D 29/66, B23Q 11/00

(54) **FILTERING DEVICE**

(30) Priority: 31.07.2008 JP 2008198077
(71) Applicant: Bunri Incorporation, Miyakonojo-shi Miyazaki 885-1202 (JP)
(72) Inventor: TASHIRO, Minoru, (JP)
(74) Representative: Bokinge, Ole
(86) International application number: PCT/JP2009/062744
(87) International publication number: WO 2010/013596

(57) **Abstract**

A filtration device (10) is provided with a filter tank (11), filter medium unit (12), magnet (19), and submerged air discharging mechanism (50). The filter medium unit (12) includes a large number of magnetic filter medium granules (31) formed of metal balls. When the magnet (19) is in a first position, the magnetic filter medium granules (31) magnetically attract one another. When the magnet (19) is moved to a second position, the magnetic filter medium granules (31) are released from the mutual magnetic attraction. In cleaning the magnetic filter medium granules (31), a clean fluid (Q2) located above the magnetic filter medium granules (31) is poured between the magnetic filter medium granules (31). In cleaning the magnetic filter medium granules (31), the submerged air discharging mechanism (50) ejects air (57) into the clean fluid (Q2) above the magnetic filter medium granules (31) and toward the magnetic filter medium granules (31). The clean fluid (Q2) above the magnetic filter medium granules (31) is urged toward the magnetic filter medium granules (31) and air bubbles are introduced into the clean fluid (Q2) by the ejected air (57). As this clean fluid (Q2) flows downward between the magnetic filter medium granules (31), the magnetic filter medium granules (31) are cleaned.

## Description

### Technical Field

The present invention relates to a filtration device for filtering a fluid containing matter to be removed, such as fine particles.

### Background Art

A machine tool for precision machining, for example, uses a fluid such as a coolant for lubricating or cooling a part being machined. As the workpiece is machined, fine particles such as swarf, carbon, etc., as well as chips, become mixed in the fluid of this type, so that the fluid is gradually tainted and inevitably becomes contaminated. A filtration device is used to filter such a contaminated fluid. In a filtration device disclosed in Jpn. Pat. Appln. KOKAI Publication No. 11-77479 (Patent Document 1), for example, chips produced by a machine tool are used as a filter medium.

The filtration device of Patent Document 1 described above captures magnetic impurities in the fluid by magnetizing the filter medium formed of chips by means of a solenoid. Since chips are used as the filter medium, however, the filtration precision varies considerably. Since the surfaces of the chips used as the filter medium are very rough, moreover, it is difficult to wash the filter medium in order to recover the filtration capability when the filtration capability is reduced. Thus, there is a problem that the chips as the filter medium need to be replaced frequently.

The inventor hereof has developed a filtration device that uses a large number of easily washable, spherical magnetic metal balls, such as steel balls, as a filter medium. In this filtration device, these magnetic metal balls are caused to attract and immobilize one another by means of a magnet. This filtration device is disclosed in Jpn. Pat. Appln. KOKAI Publication No. 2007-105706 (Patent Document 2). This filtration device has high filtration precision and its filter medium can be washed with ease.

A filter medium unit of the filtration device using the magnetic metal balls comprises a filter medium accommodation case and a large number of magnetic metal balls contained in the filter medium accommodation case. If the filter medium unit is contaminated to a certain degree, the magnetic metal balls of the filter medium unit need to be cleaned. In the filtration device described in Patent Document 2, a fluid (clean fluid) collected above the magnetic metal balls is poured toward a processing tank between the magnetic metal balls in a cleaning process. The magnetic metal balls are cleaned by this clean fluid. Sludge and the like contained in the fluid poured into the processing tank are removed by a processor such as a separator. In some cases, however, the magnetic metal balls may not be able to be fully cleaned by only pouring the fluid collected above the magnetic metal balls, so that there is room for further improvement in cleaning effect.

### Disclosure of Invention

Accordingly, the object of the present invention is to provide a filtration device in which magnetic metal balls can be fully cleaned in a cleaning process.

A filtration device of the present invention comprises a filter tank into which a fluid to be filtered is introduced, a filter medium unit contained in the filter tank, and a magnet unit which applies a magnetic field to the filter medium unit, the filter medium unit comprising a filter medium accommodation case and a large number of magnetic filter medium granules of a magnetic material contained in the filter medium accommodation case, the magnet unit comprising a magnet movable with respect to the filter medium unit between a first position and a second position and configured to apply the magnetic field to the magnetic filter medium granules, thereby causing the magnetic filter medium granules to magnetically attract and immobilize one another, when in the first position and to cancel the magnetic attraction between the magnetic filter medium granules when in the second position, the filtration device further comprising fluid supply means configured to pass the unfiltered fluid located below the magnetic filter medium granules to above the magnetic filter medium granules through the magnetic filter medium granules as the fluid in the filter tank is filtered, fluid discharge means configured to pour the filtered clean fluid located above the magnetic filter medium granules to below the magnetic filter medium granules through the magnetic filter medium granules as the magnetic filter medium granules are cleaned, and a submerged air discharging mechanism located above the magnetic filter medium granules and configured to downwardly eject air into the clean fluid above the magnetic filter medium granules, thereby urging the clean fluid toward the magnetic filter medium granules and introducing air bubbles into the clean fluid, as the magnetic filter medium granules are cleaned.

In the cleaning process for the magnetic filter medium granules, according to this structure, air is ejected into the filtered clean fluid located above the magnetic filter medium granules and toward the magnetic filter medium granules. As the clean fluid urged by the ejected air flows down between the magnetic filter medium granules, the magnetic filter medium granules can be effectively and thoroughly cleaned. Since the filtration capability is recovered in this way, high filtration accuracy can be obtained in a filtration process.

A preferred embodiment of the present invention further comprises auxiliary air supply means configured to apply an air pressure higher than the atmospheric pressure to the surface of the fluid above the magnetic filter medium granules when the magnetic filter medium granules are cleaned, thereby driving the fluid toward the magnetic filter medium granules.

### Brief Description of Drawings

FIG. 1 is a longitudinal sectional view of a filtration device according to one embodiment of the present invention;
FIG. 2 is a longitudinal sectional view of the filtration device taken along line F2-F2 in FIG. 1;
FIG. 3 is a sectional view enlargedly showing a part of a filter medium unit of the filtration device shown in FIG. 1;
FIG. 4 is a side view showing a filtration operation of magnetic filter medium granules of the filtration device shown in FIG. 1;
FIG. 5 is a longitudinal sectional view of the filtration device shown in FIG. 1 with its magnets raised;
FIG. 6 is a sectional view typically showing a state in which filtration equipment with the filtration device shown in FIG. 1 is operated for filtration; and
FIG. 7 is a sectional view typically showing a state in which the filtration equipment with the filtration device shown in FIG. 1 is operated for cleaning.

### Best Mode for Carrying Out the Invention

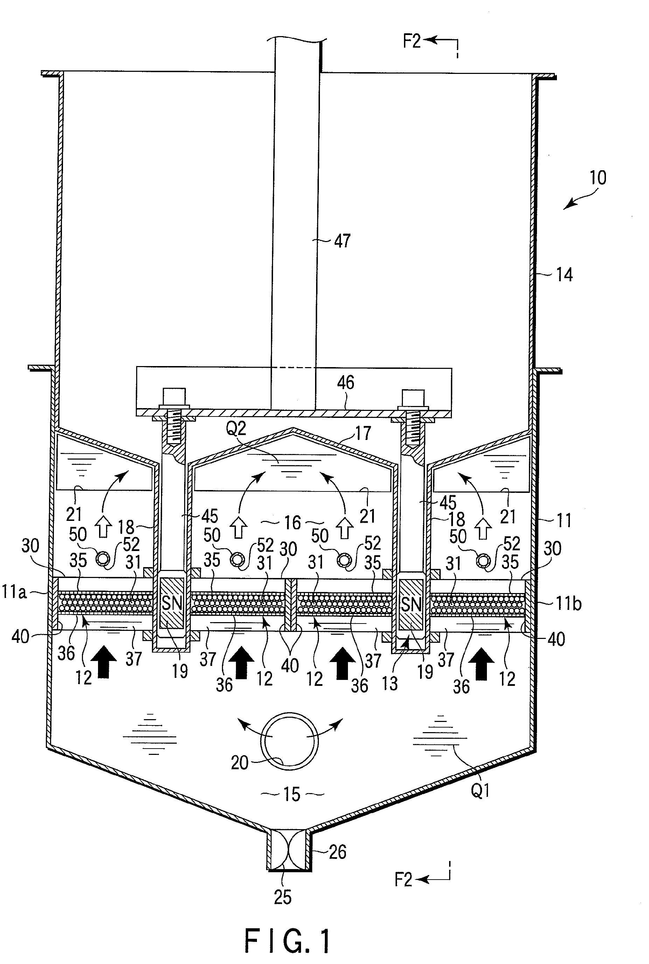

One embodiment of the present invention will now be described with reference to FIGS. 1 to 7.

A filtration device 10 shown in FIG. 1 comprises a filter tank 11, filter medium units 12, and magnet units 13. A fluid to be filtered is introduced into the filter tank 11. The filter medium units 12 are contained in the filter tank 11. The magnet units 13 apply a magnetic field to the filter medium units 12. The material of the filter tank 11 is a magnetic material, such as a ferrous metal. A cover housing 14 is disposed on top of the filter tank 11. A dirty chamber 15 and clean chamber 16 are defined in the filter tank 11. An unfiltered fluid Q1 is contained in the dirty chamber 15. A filtered clean fluid Q2 is contained in the clean chamber 16.

The dirty chamber 15 is located below the filter medium units 12. The clean chamber 16 is located above the filter medium units 12. The top of the clean chamber 16 is airtightly closed by a partition wall 17. Magnet chambers 18 are defined below the partition wall 17. The magnet chambers 18 extend vertically. Magnets 19 are contained in the magnet chambers 18, individually.

A contaminated fluid inlet 20 that opens into the dirty chamber 15 is formed in a lower part of the filter tank 11. A contaminated fluid that contains fine particles to be filtered is introduced into the dirty chamber 15 through the contaminated fluid inlet 20. A clean fluid outlet 21 that opens into the clean chamber 16 is formed in an upper part of the filter tank 11.

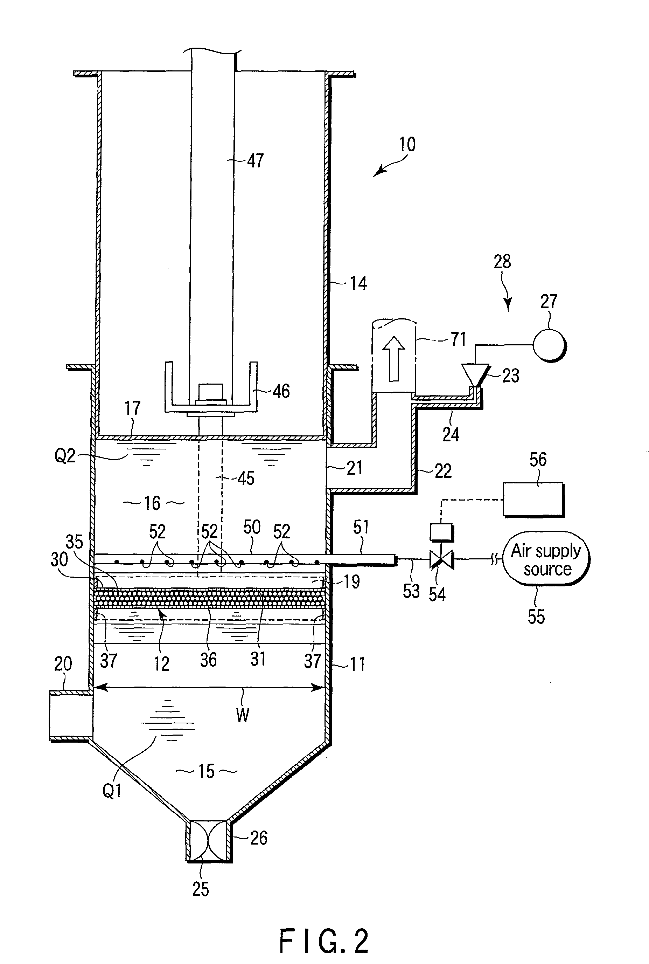

As shown in FIG. 2, a clean fluid pipe 22 is connected to the clean fluid outlet 21. The clean fluid pipe 22 is connected with an air supply pipe 24. The air supply pipe 24 is provided with an air valve 23 for use as atmospheric pressure releasing means. The clean chamber 16 can be opened to the atmosphere by opening the air valve 23. A drain port 26 is provided at the bottom of the filter tank 11, that is, at the bottom of the dirty chamber 15. The drain port 26 comprises a drain valve 25.

Preferably, a compressed air supply source 27 is connected to the air supply pipe 24. The air supply source 27 can feed compressed air into the clean chamber 16 in the upper part of the filter tank 11. The air valve 23, air supply pipe 24, and compressed air supply source 27 function as auxiliary air supply means 28.

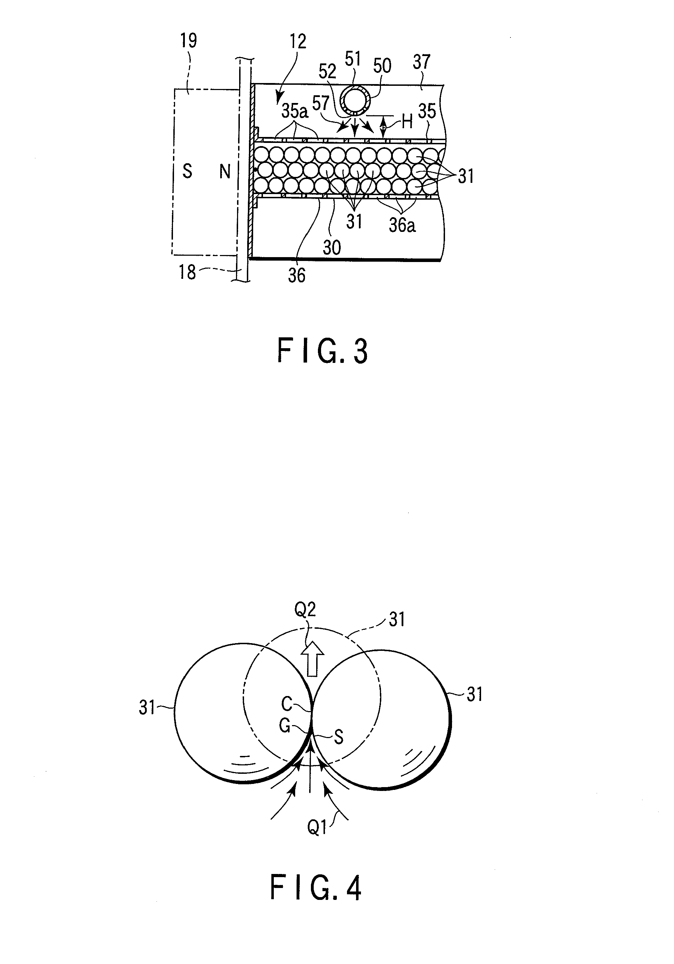

As shown in FIG. 3, the filter medium unit 12 comprises a filter medium accommodation case 30 and a large number of spherical, magnetic filter medium granules 31. These magnetic filter medium granules 31 are contained in the filter medium accommodation case 30. For example, the magnetic filter medium granules 31 are metal balls of a magnetic material, such as iron. These magnetic filter medium granules 31 attract one another in the manner shown in FIG. 4 when subjected to a magnetic field. In a free state without application of any magnetic field, magnetic attraction is canceled, so that the magnetic filter medium granules 31 can move relative to one another to some extent. The surfaces of the magnetic filter medium granules 31, like those of ball bearings, are shaped so as to be smooth and easily washable.

The respective diameters of all the magnetic filter medium granules 31 that are contained in the filter medium accommodation case 30 are equal to one another. Alternatively, a plurality of types of magnetic filter medium granules 31 with different diameters may be mixed with one another. Further, magnetic filter medium granules of a shape other than the spherical shape may be used. In short, the magnetic filter medium granules 31 should only be formed of a magnetic material, so that they may be of any shape. The magnetic filter medium granules 31 of the magnetic material attract one another to prevent their moving when subjected to a magnetic field by the magnet units 13. When the magnetic field is removed, the magnetic filter medium granules 31 are released from mutual attraction.

The filter medium accommodation case 30 comprises a pair of nonmagnetic mesh members 35 and 36, upper and lower, frame members 37, and magnetism intensification plates 40. The nonmagnetic mesh members 35 and 36 are formed of a nonmagnetic material, such as stainless steel (SUS304). The frame members 37 are arranged around the nonmagnetic mesh members 35 and 36. The magnetism intensification plates 40 are provided at respective end portions of the nonmagnetic mesh members 35 and 36. The frame members 37, like the nonmagnetic mesh members 35 and 36, are formed of a nonmagnetic material, such as stainless steel (SUS304). The magnetic filter medium granules 31 are contained in a plurality of rows between the nonmagnetic mesh members 35 and 36.

A large number of circulation holes 35a and 36a (shown in FIG. 3) are formed in the nonmagnetic mesh members 35 and 36, respectively. The circulation holes 35a and 36a are horizontally elongated slits. The width (smaller width) of these circulation holes 35a and 36a is less than the diameter of the magnetic filter medium granules 31. Therefore, the magnetic filter medium granules 31 cannot pass through the circulation holes 35a and 36a. In short, the nonmagnetic mesh members 35 and 36 are only expected to be able to support the contained magnetic filter medium granules 31 and allow a fluid to pass vertically through them.

The magnetism intensification plates 40 are provided on the filter medium units 12. The magnetism intensification plates 40 are arranged individually on the respective horizontal end portions of the filter medium units 12, that is, on those end portions thereof which are farther from the magnets 19. The magnetism intensification plates 40, which are formed of a magnetic material, such as iron, are located throughout overall length W (shown in FIG. 2) transversely relative to the filter medium units 12. When the magnets 19 are in a first position shown in FIG. 1, the magnetic filter medium granules 31 are located between the magnets 19 and magnetism intensification plates 40.

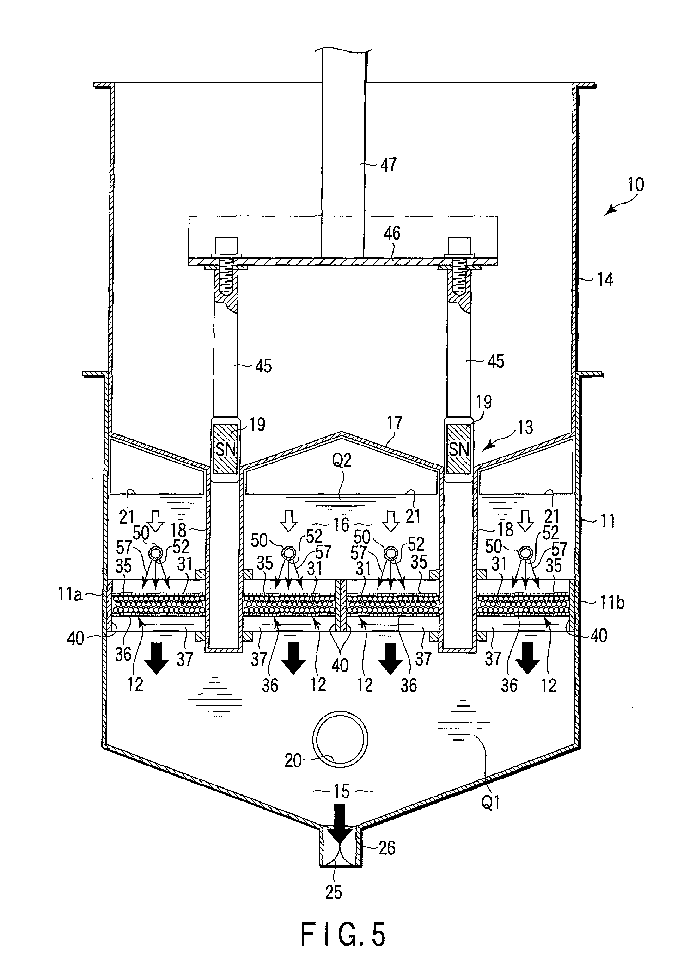

The magnets 19 are contained in the magnet chambers 18, individually, and can move vertically. An example of each magnet 19 is a strong permanent magnet. This magnet 19 moves relative to the filter medium unit 12 between the first position shown in FIG. 1 and a second position shown in FIG. 5. When the magnet 19 is in the first position, a magnetic field is applied to the magnetic filter medium granules 31, whereupon the magnetic filter medium granules 31 are caused to magnetically attract one another to be immobilized. When the magnet 19 ascends to the second position, the magnetic attraction between the magnetic filter medium granules 31 is canceled, so that the magnetic filter medium granules 31 are allowed to move to some extent.

The filtration device 10 comprises retaining means for moving the magnets 19 between the first position (FIG. 1) and second position (FIG. 5). An example of the restraining means comprises lift rods 45, connecting member 46, and operating member 47. Theconnecting member 46 connects the respective upper end portions of the lift rods 45. The operating member 47 is secured to the connecting member 46. The lift rods 45 are inserted individually into magnet chambers 18 and can move vertically together with the magnets 19. The operating member 47 is configured to be vertically driven manually or by means of an actuator (not shown). The magnets 19 can be moved between the first position and second position by the operating member 47.

Submerged air discharging mechanisms 50 are arranged above the magnetic filter medium granules 31. An example of each submerged air discharging mechanism 50 comprises a pipe 51 extending horizontally. A plurality of air jets 52 are formed in the lower surface of the pipe 51 at a predetermined pitch along the axis of the pipe 51. As shown in FIG. 2, a compressed air supply source 55 is connected to each submerged air discharging mechanism 50 through an air supply pipe 53 and open/close valve 54. Although the open/close valve 54 may be of a manually-operated type, it should preferably be a solenoid valve that is electrically opened and closed by a controller 56.

As shown in FIG. 3, distance H from the lower surface of the pipe 51 of each submerged air discharging mechanism 50 to the upper surface of the filter medium accommodation case 30 ranges from, for example, 10 to 20 mm. An example of the diameter of each air jet 52 is 1.8 mm, and an example of an interval between the air jets 52 is 60 to 70 mm, although these values are not restrictive.

In cleaning the magnetic filter medium granules 31, as shown in FIG. 5, compressed air 57 is supplied from the compressed air supply source 55 to each submerged air discharging mechanism 50. The compressed air 57 is ejected toward the magnetic filter medium granules 31 of the filter medium units 12 through the air jets 52.

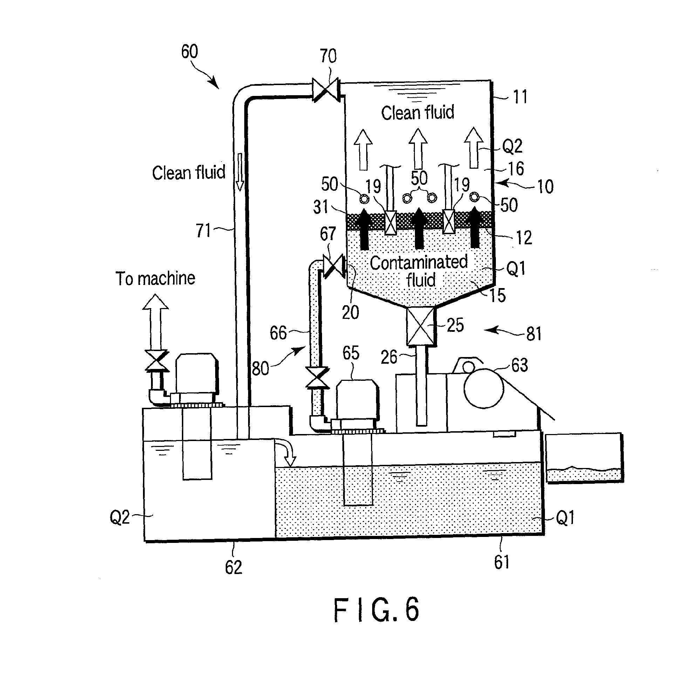

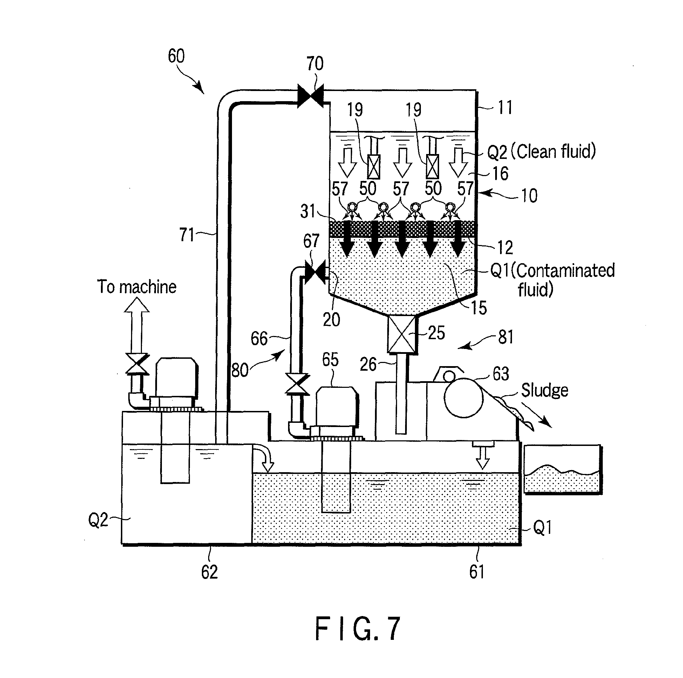

FIGS. 6 and 7 show an outline of filtration equipment 60 comprising the filtration device 10. This filtration equipment 60 comprises a dirty tank 61, a clean tank 62, the filtration device 10, a sludge processor 63, etc. The dirty tank 61 contains the fluid Q1 to be filtered. The clean tank 62 contains the filtered clean fluid Q2. The contaminated fluid Q1, which contains fine particles and the like to be removed, is delivered to the contaminated fluid inlet 20 of the filtration device 10 through a pump 65, pipe 66, and valve 67. The filtered clean fluid Q2 in the clean chamber 16 is recovered into the clean tank 62 through a valve 70 and pipe 71.

The pump 65 and pipe 66 function as fluid supply means 80. The fluid supply means 80 drives the fluid Q1 in the filter tank 11 from below to above the magnetic filter medium granules 31 as the fluid Q1 is filtered. The drain valve 25 and drain port 26 function as fluid discharge means 81. The fluid discharge means 81 has a function to pour the filtered clean fluid Q2 located above the magnetic filter medium granules 31 as the magnetic filter medium granules 31 are cleaned.

The following is a description of a filtration process and cleaning process.

In the filtration process for filtering the contaminated fluid Q1, as shown in FIG. 6, the valves 67 and 70 are opened, and the drain valve 25 is closed. Then, the contaminated fluid Q1 in the dirty tank 61 is fed into the dirty chamber 15 of the filtration device 10 by means of the pump 65. Further, a magnetic field is applied to the magnetic filter medium granules 31 by moving the magnets 19 of the magnet units 13 to the first position (FIG. 1).

As shown in FIG. 4, the magnetic filter medium granules 31 are immobilized in contact with one another by this magnetic field. If the magnetic filter medium granules 31 are secured to one another, a narrow "wedge-shaped" gap G is formed so as to be tapered toward each point C of contact between the magnetic filter medium granules 31. As the contaminated fluid Q1 flows near the contact point C between the magnetic filter medium granules 31, fine particles S get deep into the gap G and are captured. If the fine particles S are formed of a magnetic material, the magnetized magnetic filter medium granules 31 attract the fine particles S. Thus, the contaminated fluid Q1 fed into the dirty chamber 15 is filtered as it upwardly passes through the filter medium units 12, and the fluid Q1 flows into the clean chamber 16.

If the amount of the fine particles S captured by the magnetic filter medium granules 31 increases, the filtration performance is reduced. The cleaning process is executed to recover the filtration performance. In the cleaning process, the pump 65 is stopped, and the valves 67 and 70 are closed, as shown in FIG. 7. The interior of the clean chamber 16 is opened to the atmosphere by opening the air valve 23 (shown in FIG. 2). Further, the drain valve 25 is opened. By moving the magnets 19 to the second position (FIG. 5), the magnetic field having been applied to the magnetic filter medium granules 31 is canceled so that the magnetic filter medium granules 31 are released from attraction.

The clean fluid Q2 in the clean chamber 16 passes through the filter medium units 12 as it flows toward the dirty chamber 15 by its own weight. When this is done, an air pressure higher than the atmospheric pressure may be applied to the surface of the clean fluid Q2 by introducing compressed air into the clean chamber 16 through the air supply pipe 24 (shown in FIG. 2). By this air pressure, the clean fluid Q2 can be quickly driven toward the dirty chamber 15.

In the cleaning process, a large amount of air 57 is downwardly ejected toward the magnetic filter medium granules 31 through the air jets 52, in the filtered clean fluid Q2 located above the magnetic filter medium granules 31. A large number of air bubbles are introduced into the clean fluid Q2 by the air 57 ejected into the clean fluid Q2. The clean fluid Q2 passes between the magnetic filter medium granules 31 by its own weight and flows toward the dirty chamber 15. In addition, the clean fluid Q2 is urged toward the magnetic filter medium granules 31 by the air 57 ejected through the air jets 52. Accordingly, the clean fluid Q2 with the air bubbles therein rushes down through the magnetic filter medium granules 31.

The surfaces of the magnetic filter medium granules 31 are smooth spherical surfaces similar to those of ball bearings. Even if distance H from each air jet 52 to the filter medium accommodation case 30 is as short as 12 mm, therefore, the clean fluid Q2 that strikes the magnetic filter medium granules 31 permeates between the magnetic filter medium granules 31. As the clean fluid Q2 flows along the peripheral surfaces of the magnetic filter medium granules 31, it can thoroughly clean the entire magnetic filter medium granules 31.

The auxiliary air supply means 28 shown in FIG. 2 introduces air onto the fluid (clean fluid Q2) collected above the magnetic filter medium granules 31 when the magnetic filter medium granules 31 are cleaned. By this air introduction, a pressure higher than the atmospheric pressure is applied to the surface of the clean fluid Q2 above the magnetic filter medium granules 31. Thus, the clean fluid Q2 is assisted in rushing down between the magnetic filter medium granules 31.

In the cleaning process, as described above, the clean fluid Q2 located above the magnetic filter medium granules 31, along with the air bubbles, rushes down between the magnetic filter medium granules 31 toward the drain port 26 from the clean chamber 16. In this way, the surfaces of the magnetic filter medium granules 31 are cleaned by the clean fluid Q2. This is, as it were, jet cleaning. The sludge contained in the contaminated fluid discharged into the sludge processor 63 is separated from the fluid and recovered by the sludge processor 63, e.g., a separator.

As described above, the filtration device 10 of the present embodiment can easily and quickly clean the magnetic filter medium granules 31 by means of the clean fluid Q2 in the filter tank 11 as required if the magnetic filter medium granules 31 are contaminated to a certain degree or more. Thus, this filtration device 10 can recover its filtration capability in a short time. Since the cleaning process can be performed by directly using the filtration device 10 itself, moreover, the running cost is low. The filtration device 10 may be operated based on automatic switching between the filtration and cleaning processes by means of a timer.

The filtration device 10 of the present embodiment comprises the submerged air discharging mechanisms 50. In the cleaning process for the magnetic filter medium granules 31, the air 57 is ejected into the clean fluid Q2 and toward the magnetic filter medium granules 31 through the air jets 52 that open in the lower surface of the pipe 51. As the air 57 is ejected in this way, the clean fluid Q2, along with fine air bubbles in the clean fluid Q2, is directed to the magnetic filter medium granules 31. This clean fluid Q2 contacts the outer peripheral surfaces (spherical surfaces) of the magnetic filter medium granules 31 as it rushes downward.

As the clean fluid Q2 flows in this way, matter to be removed, having so far been adhering to the outer peripheral surfaces of the magnetic filter medium granules 31, is removed and discharged together with the clean fluid Q2 toward the drain port 26. Thus, the magnetic filter medium granules 31 can be almost completely cleaned, so that excellent filtration performance can be fulfilled in the filtration process to be resumed thereafter.

### Industrial Applicability

It is to be understood, in carrying out this invention, that the constituent elements of the filtration device, including the filter tank, magnetic filter medium granules, magnets, submerged air discharging mechanisms, may be embodied in suitably modified forms without departing from the spirit of the invention. Further, this invention is also applicable to filtration devices for filtering fluids other than a coolant.

## Claims

1. A filtration device (10) comprising:
a filter tank (11) into which a fluid to be filtered is introduced;
a filter medium unit (12) contained in the filter tank (11); and
a magnet unit (13) which applies a magnetic field to the filter medium unit (12),
the filter medium unit (12) comprising a filter medium accommodation case (30) and a large number of magnetic filter medium granules (31) of a magnetic material contained in the filter medium accommodation case (30),
the magnet unit (13) comprising a magnet (19) movable with respect to the filter medium unit (12) between a first position and a second position and configured to apply the magnetic field to the magnetic filter medium granules (31), thereby causing the magnetic filter medium granules (31) to magnetically attract and immobilize one another, when in the first position and to cancel the magnetic attraction between the magnetic filter medium granules (31) when in the second position,
the filtration device (10) further comprising:
fluid supply means (80) configured to pass the unfiltered fluid (Q1) located below the magnetic filter medium granules (31) to above the magnetic filter medium granules (31) through the magnetic filter medium granules (31) as the fluid (Q1) in the filter tank (11) is filtered;
fluid discharge means (81) configured to pour the filtered clean fluid (Q2) located above the magnetic filter medium granules (31) to below the magnetic filter medium granules (31) through the magnetic filter medium granules (31) as the magnetic filter medium granules (31) are cleaned; and
a submerged air discharging mechanism (50) located above the magnetic filter medium granules (31) and configured to downwardly eject air (57) into the clean fluid (Q2) above the magnetic filter medium granules (31), thereby urging the clean fluid (Q2) toward the magnetic filter medium granules (31) and introducing air bubbles into the clean fluid (Q2), as the magnetic filter medium granules (31) are cleaned.

2. The filtration device (10) according to claim 1, further comprising auxiliary air supply means (28) configured to apply an air pressure higher than the atmospheric pressure to the surface of the clean fluid (Q2) above the magnetic filter medium granules (31) when the magnetic filter medium granules (31) are cleaned, thereby driving the clean fluid (Q2) toward the magnetic filter medium granules (31).
